# EUROPEAN PATENT SPECIFICATION

(11) **EP 2 071 835 B1**
(45) Date of publication and mention of the grant of the patent: **03.11.2010**
(21) Application number: 07024328.2
(22) Date of filing: 14.12.2007
(51) Int. Cl.: H04N 5/782, H04N 5/765, H04N 7/173

(54) **Mobile virtual personal video recorder**
Mobiles und virtuelles persönliches Videoaufzeichnungsgerät
Enregistreur vidéo, personnel, mobile et virtuel

(43) Date of publication of application: 17.06.2009
(73) Proprietor: Deutsche Telekom AG, 53113 Bonn (DE)
(72) Inventor: Knight, Phil, Surrey KT10 9PG (GB)
(74) Representative: COHAUSZ DAWIDOWICZ HANNIG & SOZIEN

(56) References cited:
- EP-A- 1 587 305
- WO-A-02/31701
- WO-A-2007/055752
- US-A1- 2004 117 845

## Description

The invention relates to a method for storage and/or access of records of television programmes and for remote reproduction of recorded television programmes, which are recorded by a personal video recorder (PVR) that is at least temporarily connectable to a server using a first communication channel.

Such personal video recorders (PVR) are used for recording television programmes for viewing later and/or for storing the content.

Typically on a PVR system there will be some form of electronic programme guide available, or some method for the customer to discover, review and decide to record a suite of programmes that they are interested in viewing multiple times or at some future time.

Typically this set of choices is programmed into the PVR and the PVR will autonomously then record the programme. Alternatively the PVR can typically be set to record a programme that is occurring at the instant that the customer is present, such that for instance the customer can then view an alternative channel and come back to also review the recorded content at a later time. The known recording systems may be very complicated to use and to be programmed to record a selected programme, in particular when used via a small screen device such as a mobile phone.

Further there is known webbased video on demand systems. A great disadvantage of said video on demand systems (VOD) is that the user only can choose out of a limited list of content may be without covering his special interests.

WO 02/31701 A2 discloses a system and method that allows users to store, retrieve, and manipulate on-demand media content and data stored on a remote server network in an on-demand media delivery system. The system includes a remote storage that is used to store, inter alia media content. The system provides an account for the user and allows the user to upload personal images or files to the remote storage being part of an on-demand delivery server for later retrieval and display. The system further allows to access his or her on-demand media account from user equipment in different locations as long as the current user equipment can communicate with a remote server that stores user-specific information. The system upon user selection may freeze the delivery of on-demand media at a particular point and allow the user to resume the media at a later time from some other network location in system.

For the purpose of retrieval of stored content from a different user equipment than that the content was previously recorded, it is necessary to upload the media content to be viewed to the remote storage entirely. This means that, considering all users, the remote storage must provide enormous storage capacity, and that the communication channel between the user equipment and the remote server network must provide sufficient bandwidth, i.e. a broadband connection to upload the media content to the remote storage.

WO 2007/055752 A1 discloses a method and apparatus for operating an electronic program guide on a portable mobile communications device which is part of a larger network that is communicable with a mobile radio access network and capable of receiving broadcasts from a mobile television service provider. The portable mobile communications device displays a list of programs being generally available and accepts input that selects one of the programs. This causes a display of the list of options that can be applied to the selected program. The portable mobile communications device then accepts input and performs the selected option for the selected program. The list of options includes an option to record the selected program locally in the portable mobile communications device, remotely in an internet personal storage, or on a home personal video recorder (PVR). A list of stored programming with the location of the stored programming identified can be displayed on the screen of mobile device. This screen displays the programs currently available to view. The user, knowing that certain content is stored on his home PVR, can select this content via remote link. In this case content media data is transferred from the PVR to the portable mobile communications device, via internet, mobile television service provider and mobile radio access network.

The drawback of this method is that the PVR must be connected constantly to the internet and the mobile television service provider. Otherwise, the selected stored programming on the PVR is not available on the mobile device. Furthermore, the connection of PVR to the internet must provide high uplink bandwidth to ensure a sufficient transfer rate to stream the programming to the mobile device. This is not the case for standard household internet connections even if broadband connections are used, as the upload bandwidth is always considerably smaller than the download bandwidth.

Furthermore, the US patent application 2004/0117845 A1 discloses a system and method to support media exchange and sharing between, for example, family members and friends in an efficient, user-friendly, and economically viable manner over a closed and secure media exchange network. Digital media may be pushed from one user to another over a media exchange network, or pulled from one location to another over a media exchange network. Sources of media on a media exchange network may include any digital storage devices including servers, PC's, MPS's (media processing systems), media storage servers (e.g., NAS (network attached storage) units), and media peripheral devices, a media peripheral device comprising a computer running media capture software and/or media player software and having functionality that is coordinated through, for example, a TV screen.

The method of US 2004/0117845 A1 is neither related to the storage and/or access of records of television programmes, which are recorded by a personal video recorder (PVR), nor to PVR systems with electronic programme guides to enable the customer to discover, review and decide to record a suite of programmes that they are interested in viewing multiple times or at some future time.

A very similar system is described in document EP 1 587 305 A2.

The object of the invention is to implement a virtual personal video reorder in a network without the need to provide communications channels with a high bandwidth and to provide a video on demand system including the possibility to govern the content of such video on demand system and to perform an easier way to control a video recording system.

This object is achieved according to the invention by the method of claim 1. Preferred embodiments of the invention result from the characteristics mentioned in the dependent claims.

The basis of this application is to implement a virtual PVR (personal video reorder) in a network like the 'internet' such that it is synchronised with an actual PVR in a consumers residence. The benefit of this is then that the CPE (customer premises equipment) installation and equipment can be simplified and the clash of a user watching the PVR in the main residence and someone else wanting to watch recorded content elsewhere will not happen. The CPE (customer premises equipment) may be a mobile equipment, e.g. a mobile phone or a laptop, or suitable integrated radio modem in the PVR itself, using e.g. a public land mobile network (PLMN) for communication.

This concept is intended to be relevant for mobile access in particular to the recorded content, e.g. via a mobile phone with suitable streaming capability, or via a laptop accessing the internet from a connection which may or may not be at the main residence where the PVR is situated.

Preferably the server is a network based server, particularly a web server. Using a web server it is possible to use network resources in a very simple and advantageously way.

Preferably the transferred and stored dataset includes further recording information, particularly the programme title and/or the date of recording and/or the length of recording and/or whether the programme is a part of a series and/or programme classification. That means, that the central server can be informed of a wider range of information concerning the recorded programmes and content, this would include but is not limited to:
- The programme title and date of recording
- Whether the programme is part of a series that the customer has indicated they want recording
- Any rating that the customer has assigned to the programme in terms of a favourites marking, or any other form of assessment

The classification of the programme can be a sorted list of favourites or any other form of assessment given by the user or alternatively automatically generated, e.g. by detecting the quantity of records of a special class of programme or of special series.

Preferably the first communication channel is using a telephone modem and/or dial up internet access and/or broadband internet access and/or a wireless system, particularly wireless ethernet and/or bluetooth to a transceiver and/or a mobile telephone connection via a pubilc land mobile network. The communication between the video recorder (PVR) and the server / database can be very low bandwidth, due to the fact, that only the identity of the recorded programmes is transferred, (title and other relevant information).

Preferably the video recorder is at least connected to the server on every recording or deleting event at the personal video recorder and/or periodic, particularly after a settable period.

Preferably the database is updated by storing and/or deleting datasets or streams on every recording or deleting event at the personal video recorder and/or periodic, particularly after a settable period.

The trigger for the communication between the PVR and the central server could be but is not limited to the following:
- A recording/deleting event at the PVR
- A periodic update
- A response to a request for information received from the central network server via a suitable channel (e.g. a downlink satellite broadcast channel)

Preferably the personal video recorder is identified by an identification and/or authentification. Using an identification and/or authentification of the video recording system which is allowed to connect to the server and the database for writing or deleting datasets it is possible to reduce the risk of an error or intrusion of an illegitimate person.

The server and/or the database are accessed by mobile equipment using a second communication channel, particularly by a mobile phone or a laptop computer. The database including the stored content, i.e. the identity of the recorded television programmes, are downloaded by using mobile equipment and displayed on the display of the mobile equipment, whereas the display can be integrated or connected to the mobile equipment, in particular a mobile phone or a laptop. For starting the connection and downloads the database is accessed by the mobile equipment using a mobile communication channel, e.g. via a public land mobile network and via the server. Preferably the communication channel used by the mobile equipment is a public land mobile network.

Preferably the mobile equipment is identified by a identification and/or authentification. Using an identification and/or authentification of the mobile equipment it is possible to reduce the risk of an error or intrusion of an illegitimate person. Consideration must also be given to the authentication and identification of the PVR so that the probability of an intruder deliberately or erroneously accessing the data store of another valid PVR is close to zero.

Preferably one or more personal video recorder/s and one or more mobile equipment/s, which are accessible to the server and/or the database, are paired by the server by identification and/or authentification of the personal video recorder/s and the mobile equipment/s.

The PVR and mobile terminal must be paired though the subscription in the network server. This means that part of the initial provisioning process must allow for the network server to discover the identity of the mobile terminal, the identity of the PVR, and to pair them, this discovery must be secure and reliable. One or more PVRs could be paired to one or more mobile terminals allowing the sharing of content between a family or other grouping. It is possible to identify mobile equipment is by using the Mobile Subscriber Integrated Services Digital Network Number (MSISDN).

Preferably the one or more personal video recorder/s and/or one or more mobile equipment/s are identified by capturing username and password.

A list of recorded datasets is available from the database by mobile equipment and said list is displayed by the mobile equipment. Having accessed the list of stored content, a page of some form is rendered at the mobile terminal to represent an electronic programme guide of the stored content. This may be for instance a web page in the case that the mobile device is accessing via a browser, or a proprietary coding or some other standard coding if the mobile device is accessing by a non browser application, for instance a client designed specifically for this purpose.

Preferably a selectable dataset is transferable as a datastream from the database via the server and the communication channel to mobile equipment.

The electronic programme guide is transferred to mobile equipment and displayed by the mobile equipment or displayed by a display connected to the mobile equipment. The display may be integrated e.g. into a mobile phone or may be an external device with a (bigger) screen.

Preferably programmes to be recorded by the personal video recorder can be selected from an electronic programme guide using mobile equipment by transmitting a recording instruction from the mobile equipment via the server to the personal video recorder.

Preferably a list of similar or supplemental programmes is provided by the server. This then opens the opportunity to allow the operator of the service to use a recommendation engine to push other viewing suggestion which can be any content from the entire catalogue, based on for instance but not limited to:
- The customers known viewing history
- The current total content of their PVR
- The currently selection that the customer has made on the mobile terminal
- Recommendations from other customers with similar viewing patterns.

The benefits and possibilities of the invention are several folds:
- Only a limited uplink channel is needed from the PVR in situ to the network in order to provide a full service to the 'mobile customer'
- The 'mobile customer' can watch pre-recorded content independently of the customer using the physical PVR, clashes are therefore avoided. This may be of great benefit even in the home where otherwise a clash would have occurred stimulating discord between the individuals involved.
- There is no need for the PVR to be connected to a broadband internet access point or to use substantial data allowances as would be the case if the content were streamed directly from the physical PVR.
- The installation of the CPE equipment is simpler than the use of an external system to stream content from the PVR via a broadband comms link as is a frequently used system.
- The terminal can act as a mechanism to control what new content is being recorded onto the PVR, because it has access to the EPG. It is noted that such systems already exist.
- The fact that the list of recorded content is held centrally means that a recommendation engine technique can be used to analyse the consumption of media of the customer, both whilst mobile and also whilst viewing from the home, and then to push proposed new content to the customer based on the categorisation of the content and also what other customers chose to consume who have a similar viewing preference as described in the extension section (section 3).
- The fact that the content that the customer consumes whilst mobile is known allows greater targeting of additional content that is of particular interest to mobile customers. This type of content can then be made available through an extended video on demand capability as described in the extensions section of this documents.
- The fact that a customer has taken the trouble to record a particular piece of content is inherently indicative that they wish to consume that piece of content at some point. This means that the problem of finding attractive content for the mobile device service is inherently solved, because it is customer chosen content.
- The discovery of the content will be a simpler and richer experience on the home system which is likely to be a large screen device. The mobile service which will have an inherently more awkward discovery mechanism can then benefit from the ease of use of a larger screen system for the purposes of discovery.

In the following the Initial PVR content update is explained. This invention proposes that via a communication channel a network based central server is informed by the PVR of the status of the recorded content, this would include but is not limited to:
- The programme title and date of recording
- Whether the programme is part of a series that the customer has indicated they want recording
- Any rating that the customer has assigned to the programme in terms of a favourites marking, or any other form of assessment

This information is stored in a central server, against the identity of the subscriber such that there is a relatively up to date set of per customer data that indicates the PVR contents.

Since the data that is passed from the PVR to the central server is very modest (e.g. a list of 20 recorded programme titles along with durations and other associated data is estimated to be less that 5kbytes of actual data if suitably encoded) the communications channel between the PVR and the central server can be very low bandwidth eg:
- telephone modem
- dial up internet
- broadband internet
- wireless system (WiFi to suitable hub, Bluetooth to suitable transceiver, GPRS, UMTS, LTE, Wimax)

Of these the telephone may be the preferred choice.

For the purposes of this paper the network based central server may particularly be a server that is assumed to be operated by a service provider, offering this service to numerous customers. As an example this would have constituent parts of, but not limited to:
- A storage and communication mechanism to allow incoming data from the PVRs to be received and stored in a suitable database as described.
- A media store loaded with and capable of sourcing the necessary number of streams to mobile devices that are requested as described hereinafter.
- Access to the full repertoire of content that may have been recorded on the PVR via a networks based video on demand system

The trigger for the communication between the PVR and the central server could be but is not limited to the following:
- A recording/deleting event at the PVR
- A periodic update
- A response to a request for information received from the central network server via a suitable channel (e.g. a downlink satellite broadcast channel)

Consideration must be given to the timeliness of these updates, for instance a single update once per day will mean that the information held centrally in the network is out of date by approximately 12 hours on average. Alternatively if the update is made every time some element of change occurs to the recorded content (e.g. addition or deletion of a recording,) then the bandwidth and potentially the cost of the communication between the PVR and the network need to be taken into account.

Consideration must also be given to the authentication and identification of the PVR so that the probability of an intruder deliberately or erroneously accessing the data store of another valid PVR is close to zero.

Further it is explained how the content retrieval from mobile device works.

When a customer uses a mobile device (for the purposes of this document the definition of a mobile device is: a device which is not the PVR onto which the content was initially recorded) and wishes to view the recorded content for instance the following process occurs:
i) The mobile device accesses the central server via a suitable broadband internet access pipe. This pipe needs to have sufficient bandwidth to support the encoding of the content that it will stream later in this process. Typically this will be in the range 100k bits per second which would be suitable for a small screen mobile device, up to several Mbits per second which may be needed for a high definition device.
ii) The PVR and mobile terminal must be paired though the subscription in the network server. This means that part of the initial provisioning process must allow for the network server to discover the identity of the mobile terminal, the identity of the PVR, and to pair them, this discovery must be secure and reliable. One or more PVRs could be paired to one or more mobile terminals allowing the sharing of content between a family or other grouping.
iii) The access to the central server includes sufficient information for the mobile customer to be identified. This could be an automated process using for instance some form of header enrichment, or a manual process such as username and password. The security of this process needs to be such that that the probability of an intruder deliberately or erroneously accessing the data store appearing to be this PVR and mobile owner is close to zero.
iv) This identification is used by the central server to access the data stored for the specific customers, this will be the list of content that the customer has stored on their PVR and that the PVR has previously notified to the central server as described above.
v) Having accessed the list of stored content, a page of some form is rendered at the mobile terminal to represent an electronic programme guide of the stored content. This may be for instance a web page in the case that the mobile device is accessing via a browser, or a proprietary coding or some other standard coding if the mobile device is accessing by a non browser application, for instance a client designed specifically for this purpose.
vi) The customer uses the electronic programme guide to choose a previously recorded piece of content. This selection is then indicated back to the server by for instance clicking a cursor onto the item involved.
vii) The server accesses a central video on demand store of all recent programmes and begins to play a stream of the selected programme from the video on demand (VOD) store to the specific mobile device which has chosen it. The VOD store is a common store servicing all/many customers. In general the underlying protocol between the mobile device and the network server will be a point to point protocol, not a broadcast protocol, because the content timing and choice will be unique to each individual user, rendering broadcast techniques uneconomic.
viii) The combination of the user specific stored lists of content and the VOD store of recent programmes together form a virtual instance of the actual PVR that resides at the customers chosen premises.
ix) When accessing the electronic programme guide the mobile terminal could have the ability to add new recordings to those already on the PVR, this being signalled to the PVR from the network server via a suitable communications channel, and also to delete recordings on the PVR again this being signalled to the PVR via a suitable channel.

In addition to the basic invention that is described in the previous sections there are also some other extensions that the technology allows the operator to take advantage:

In the case where the home PVR uses broadcast feeds predominantly for its reception of content then the opportunity for video on demand (VOD) services is very limited, because the broadcast transmission techniques would not be viable for the delivery of VOD content, there being too many simultaneous streams needed.

However, the mobile terminal uses a point to point streaming technique and whilst the primary point of this invention is to enable the customer to watch the recorded content already selected for the home PVR there is the inherent capability to deliver any content included in the entire content catalogue accessible by the network server to the mobile device via the same streaming mechanism, and at the instant that the customer is watching the mobile terminal.

This then opens the opportunity to allow the operator of the service to use a recommendation engine to push other viewing suggestion which can be any content from the entire catalogue, based on for instance but not limited to:
- The customers known viewing history
- The customer's known mobile viewing history
- The current total content of their PVR
- The currently selection that the customer has made on the mobile terminal
- Recommendations from other customers with similar viewing patterns.

The service outlined in section above can be further enhanced to provide an opportunity for up selling the customer onto a full video on demand service. The service outlined before allows a commitment free method for the customer to experience the benefits of video on demand without the need to engage in any home CPE equipment configuration, software download, additional subscription, or other complexity until the point where they are certain that they wish to upgrade to VOD.

Whilst the live feed of adverts via the broadcast channel can be targeted easily to be specific to that channel, a video on demand or similar point to point system allows a far more targeted channel to the customer. The nature of the advert being shown can for instance be chosen on the basis of but not limited to:
- the programme being watched
- the historical viewing pattern of the customer of mobile terminal
- the required segment defined by the advertiser and its match with this customer

In addition the fact that the mobile terminal is likely to be a personal device whereas the home PVR and associated display equipment is more likely to be a family/community device means that any advertising can be made much more individual on the mobile terminal device and inserted into the transmitted streams than the segmentation and transmission technology would allow on the broadcast channels to the PVR device.

The overall process as described above is shown in diagrams 1 to 3. The invention is explained in greater detail in the following by means of exemplary embodiments with reference to the associated drawing, in which:
- Fig. 1: shows a schematic diagram of the recording and storage method;
- Fig. 2: shows a schematic diagram of a request for and transfer of an electronic programme guide uising a mobile equipment;
- Fig. 3: shows a schematic diagram of a request for and transfer of a datastream containing a recorded programme from the database uising a mobile equipment.

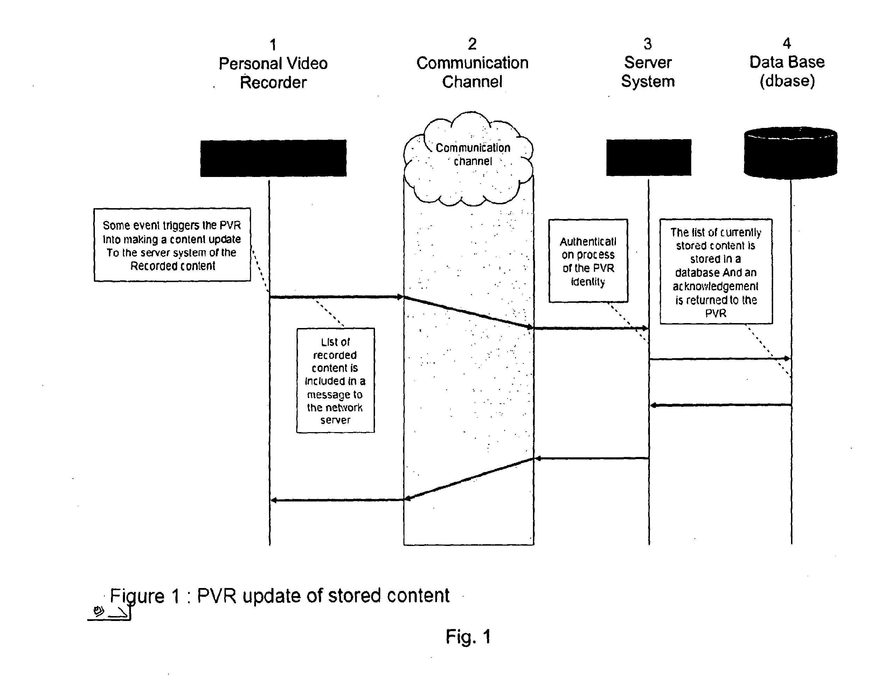

Fig. 1 shows the Initial PVR content update. Some event, e.g. a recording/deleting event at the Personal Video Recorder (PVR), triggers the Personal Video Recorder 1 into making a content update to the server system 3 of the recorded content stored in the database 4.

Via a communication channel 2 a network based central server 3 is informed by the PVR 1 of the status of the recorded content, including the programme title and date of recording. This information is stored in a central server 3 which is a web server, against the identity of the subscriber such that there is a relatively up to date set of per customer data that indicates the PVR contents. The communication channel 2 is build up by an internet access.

The trigger for the communication between the PVR 1 and the central server 3 via the communication channel 2 is in this case a recording/deleting event at the PVR 1. Alternatively the trigger can be a periodic update or a response to a request for information received from the central network server via a suitable channel.

Consideration must be given to the authentication and identification of the PVR 1 so that the probability of an intruder deliberately or erroneously accessing the data store 4 of another valid PVR is close to zero.

The list of currently stored content recorded by the video recorder 1 is transferred via the server 3 to the database 4 and stored in the database 4. Further an acknowledgement is returned from the database 4 via the server 3 and further using the communication channel 2 to the PVR 1.

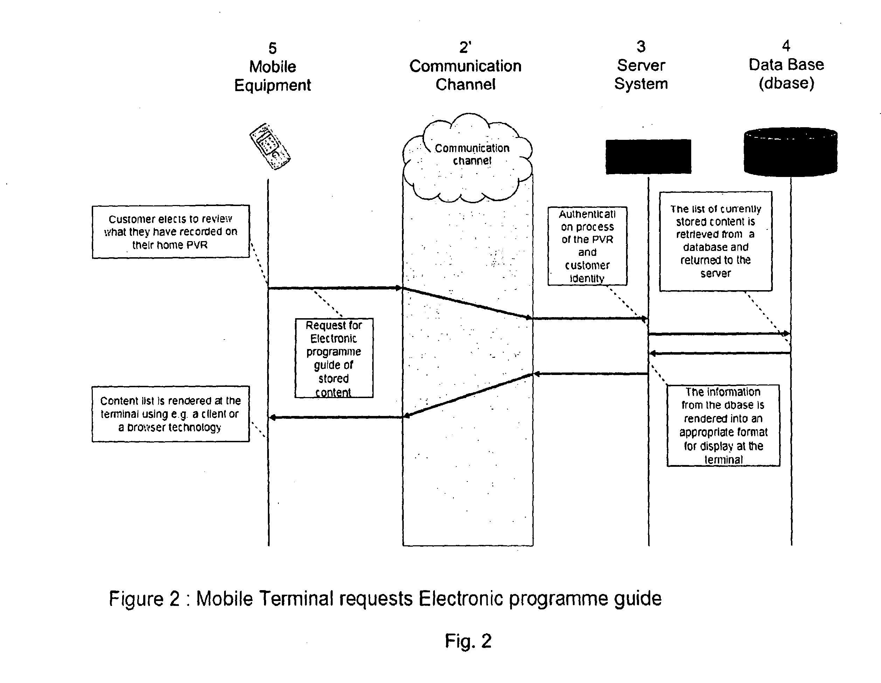

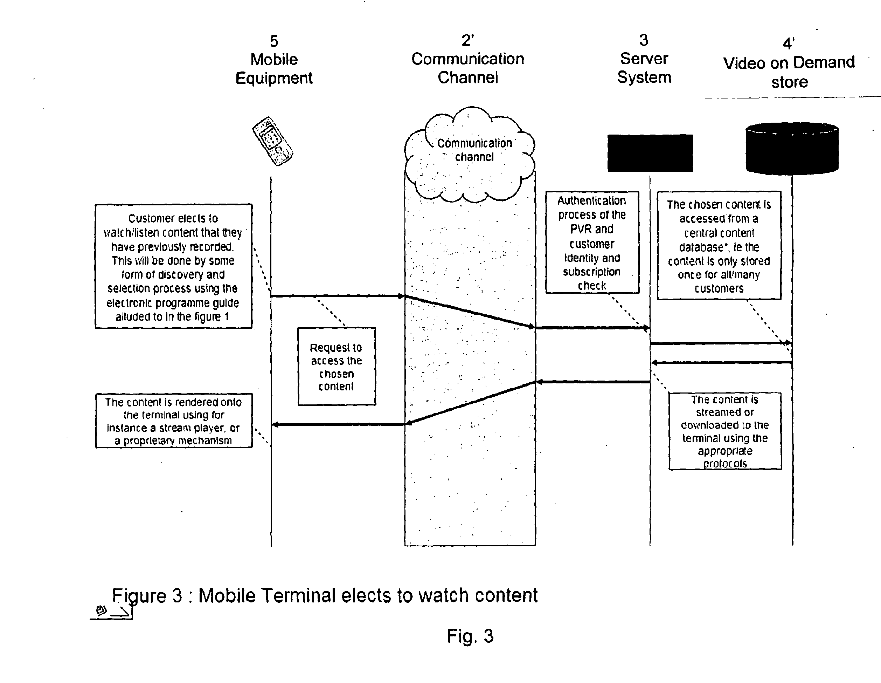

When a customer uses a mobile equipment or mobile device 5 (For the purposes of this document the definition of a mobile device is: a device which is not the PVR onto which the content was initially recorded) and wishes to view the recorded content the following process occurs as shown in figures 2 and 3:

The mobile device 5 accesses the central server 3 via a suitable broadband internet access pipe 2', named communication channel in figures 2 and 3. This channel 2' needs to have sufficient bandwidth to support the encoding of the content that it will stream later in this process. Typically this will be in the range 100k bits per second which would be suitable for a small screen mobile device 5, up to several Mbits per second which may be needed for a high definition device.

The PVR 1 and mobile terminal 5 must be paired though the subscription in the network server 3. This means that part of the initial provisioning process must allow for the network server 3 to discover the identity of the mobile terminal 5, the identity of the PVR 1, and to pair them, this discovery must be secure and reliable. One or more PVRs 1 could be paired to one or more mobile terminals 5 allowing the sharing of content between a family or other grouping.

The access to the central server 3 includes sufficient information for the mobile customer to be identified. This could be an automated process using for instance some form of header enrichment, or a manual process such as username and password or the MSISDN of the mobile equipment 5. The security of this process needs to be such that that the probability of an intruder deliberately or erroneously accessing the data store 4 appearing to be this PVR 1 and mobile owner is close to zero.

This identification is used by the central server 3 to access the data stored in the database 4 for the specific customers, this will be the list of content that the customer has stored on their PVR 1 an that the PVR 1 (not shown in figures 2 and 3 )has previously notified to the central server as described above (see figure 1).

Having accessed the list of stored content from the database 4, a page of some form is rendered at the mobile terminal 5 to represent an electronic programme guide of the stored content. This may be for instance a web page in the case that the mobile device 5 is accessing via a browser, or a proprietary coding or some other standard coding if the mobile device is accessing by a non browser application, for instance a client designed specifically for this purpose. The customer uses the electronic programme guide to choose a previously recorded piece of content. This selection is then indicated back to the server by for instance clicking a cursor onto the item involved.

The server 3 accesses a central video on demand store 4' of all recent programmes and begins to play a stream of the selected programme from the VOD store 4' to the specific mobile device 5 which has chosen it. The VOD store 4' is a common store servicing all/many customers. In general the underlying protocol between the mobile device 5 and the network server 3 will be a point to point protocol, not a broadcast terminal, because the content timing and choice will be unique to each individual user, rendering broadcast techniques uneconomic.

The combination of the user specific stored lists of content and the VOD store 4' of recent programmes together form a virtual instance of the actual PVR 1 that resides at the customers chosen premises. When accessing the electronic programme guide the mobile terminal 5 could have the ability to add new recordings to those already on the PVR 1, this being signalled to the PVR 1 from the network server 3 via a suitable communications channel 2, and also to delete recordings on the PVR 1 again this being signalled to the PVR 1 via a suitable channel 2.

The communication channels 2, 2' between the PVR 1 and the server 3 (channel 2) as well as between the mobile equipment 5 and the server 3 (channel 2') may be of the same type, e.g. using a public land mobile network, or may be of different types as described in the example given above.

## Claims

1. Method for storage and/or access of records of television programmes and for remote reproduction of recorded television programmes, which are recorded by a personal video recorder (1) that is at least temporarily connectable to a server (3) using a first communication channel (2), the server having access to a video on demand store of all recent programmes the method being, **characterised in that**
via said first communication channel (2) a dataset of recording information about a programme recorded in the personal video recorder (1) with the identity of the recorded programme is transferred to the server (3) and stored into a database (4) by the server (3) using a storage mechanism, and that a list of stored datasets is available from the database (4) by a mobile equipment (5) via a second communication channel (2'), said list being displayed by the mobile equipment (5) as a page to represent an electronic programme guide of the stored datasets, a programme can be chosen from the electronic programme guide, this selection being then indicated back to the server (3), and that the server (3) accesses said central video on demand store and begins to play a stream of the selected programme from the video on demand store to the specific mobile equipment (5) which has chosen it.

2. Method according to claim 1, **characterised in that** the server (3) is a network based server, particularly a webserver.

3. Method according to one of the preceding claims, **characterised in that** the transferred and stored dataset includes further recording information, particularly the programme title and/or the date of recording and/or the length of recording and/or whether the programme is a part of a series and/or programme classification.

4. Method according to one of the preceding claims, **characterised in that** the first communication channel (2) is using a telephone modem and/or dial up internet access and/or broadband internet access and/or a wireless system, particularly wireless ethernet and/or bluetooth to a transceiver and/or a mobile telephone connection via a pubilc land mobile network.

5. Method according to one of the preceding claims, **characterised in that** the video recorder (1) is at least connected to the server (3) on every recording or deleting event at the personal video recorder (1) and/or periodic, particularly after a settable period.

6. Method according to one of the preceding claims, **characterised in that** the database (4) is updated by storing and/or deleting datasets on every recording or deleting event at the personal video recorder (1) and/or periodic, particularly after a settable period.

7. Method according to one of the preceding claims, **characterised in that** the personal video recorder (1) is identified by an identification and/or authentification.

8. Method according to one of the preceding claims, **characterised in that** the second communication channel (2') used by the mobile equipment (5) is a public land mobile network.

9. Method according to one of the preceding claims, **characterised in that** the mobile equipment (5) is identified by an identification and/or authentification.

10. Method according to one of the preceding claims, **characterised in that** one or more personal video recorder/s (1) and one or more mobile equipment/s (5), that are accessible to the server (3) and/or the database (4) are paired by the server (3) by identification and/or authentification of the personal video recorder/s (1) and the mobile equipment/s (5).

11. Method according to one of the preceding claims, **characterised in that** the mobile equipment (5) is identified by using the Mobile Subscriber Integrated Services Digital Network Number (MSISDN).

12. Method according to one of the preceding claims, **characterised in that** the one or more personal video recorder/s (1) and/or one or more mobile equipment/s (5) are identified by capturing username and password.

13. Method according to one of the preceding claims, **characterised in that** a selectable dataset is transferable as a datastream from the database (4) via the server (3) and the communication channel (2') to a mobile equipment (5).

14. Method according to one of the preceding claims, **characterised in that** programmes to be recorded by the personal video recorder (1) can be selected from an electronic programme guide using a mobile equipment (5) by transmitting a recording instruction from the mobile equipment (5) via the server (3) to the personal video recorder (1).

15. Method according to one of the preceding claims, **characterised in that** a list of similar or supplemental programmes is provided by the server (3).

## Patentansprüche

1. Arbeitsverfahren zur Speicherung von und/oder zum Zugriff auf Aufzeichnungen von Fernsehsendungen und zur entfernten Wiedergabe von aufgezeichneten Fernsehsendungen, die mit einem Personal Video Recorder (1) aufgezeichnet werden, der zumindest vorübergehend über einen ersten Übertragungskanal (2) mit einem Server (3) verbunden werden kann, wobei der Server Zugriff auf einen Video-on-Demand-Speicher aller aktuellen Sendungen hat und das Arbeitsverfahren **dadurch gekennzeichnet ist, dass** über den genannten ersten Übertragungskanal (2) ein Datensatz aus Aufzeichnungsinformationen über die im Personal Video Recorder (1) aufgezeichnete Sendung mit der Identität der aufgezeichneten Sendung an den Server (3) übertragen und vom Server (3) mittels eines Speichermechanismus in einer Datenbank (4) gespeichert wird, und dass eine Liste gespeicherter Datensätze über einen zweiten Übertragungskanal (2') durch eine mobile Vorrichtung (5) aus der Datenbank erhältlich ist, wobei diese Listen von der mobilen Vorrichtung (5) als Seite gezeigt wird, die einen elektronischen Programmführer aus den gespeicherten Datensätze darstellt, und dass eine Sendung aus dem elektronischen Programmführer ausgewählt werden kann, die dann an den Server (3) zurückgemeldet wird, und dass der Server (3) auf den genannten zentralen Video-on-Demand-Speicher zugreift und das Abspielen eines Datenstroms der ausgewählten Sendung aus dem Video-on-Demand-Speicher an die betreffende mobile Vorrichtung einleitet, die dieselbe ausgewählt hat.

2. Das Arbeitsverfahren nach Anspruch 1, zusätzlich **dadurch gekennzeichnet, dass** der Server (3) ein netzwerkgestützter Server ist, insbesondere ein Webserver.

3. Das Arbeitsverfahren nach einem der vorstehenden Ansprüche, zusätzlich **dadurch gekennzeichnet, dass** der übertragene und gespeicherte Datensatz weitere Aufzeichnungsinformationen enthält, insbesondere den Namen der Sendung und/oder das Aufzeichnungsdatum und/oder die Länge der Aufzeichnung und/oder die Angabe, ob die Sendung zu einer Serie gehört, und/oder die Einstufung der Sendung.

4. Das Arbeitsverfahren nach einem der vorstehenden Ansprüche, zusätzlich **dadurch gekennzeichnet, dass** der erste Übertragungskanal (2) ein Telefonmodem und/oder einen Internet-Einwahlzugang und/oder einen Internet-Breitbandzugang und/oder ein drahtloses System nutzt, insbesondere eine drahtlose Ethernet- und/oder Bluetooth-Verbindung zu einem Sendeempfänger und/oder eine Mobiltelelefonie-Verbindung über ein öffentliches terrestrisches Mobilnetz.

5. Das Arbeitsverfahren nach einem der vorstehenden Ansprüche, zusätzlich **dadurch gekennzeichnet, dass** der Video Recorder (1) zumindest bei jedem Aufzeichnungs- oder Löschereignis am Video Recorder (1) und/oder periodisch, insbesondere nach einer einstellbaren Zeitdauer, mit dem Server (3) verbunden ist.

6. Das Arbeitsverfahren nach einem der vorstehenden Ansprüche, zusätzlich **dadurch gekennzeichnet, dass** die Datenbank (4) bei jedem Aufzeichnungs- oder Löschereignis am Video Recorder (1) und/oder periodisch, insbesondere nach einer einstellbaren Zeitdauer, durch das Speichern und/oder Löschen von Datensätzen auf den aktuellen Stand gebracht wird.

7. Das Arbeitsverfahren nach einem der vorstehenden Ansprüche, zusätzlich **dadurch gekennzeichnet, dass** der Personal Video Recorder (1) durch eine Identifizierung und/oder Authentifizierung identifiziert wird.

8. Das Arbeitsverfahren nach einem der vorstehenden Ansprüche, zusätzlich **dadurch gekennzeichnet, dass** der zweite, von der mobilen Vorrichtung (5) genutzte Übertragungskanal (2') ein öffentliches terrestrisches Mobilfunknetz ist.

9. Das Arbeitsverfahren nach einem der vorstehenden Ansprüche, zusätzlich **dadurch gekennzeichnet, dass** die mobile Vorrichtung (5) durch eine Identifizierung und/oder Authentifizierung identifiziert wird.

10. Das Arbeitsverfahren nach einem der vorstehenden Ansprüche, zusätzlich **dadurch gekennzeichnet, dass** ein oder mehrere Personal Video Recorder (1) und eine oder mehrere mobile Vorrichtungen (5), auf die der Server (3) und/oder die Datenbank (4) Zugriff hat, vom Server (3) durch die Identifizierung und/oder Authentifizierung der Personal Video Recorder (1) und der mobilen Vorrichtungen (5) zu Paaren verbunden werden.

11. Das Arbeitsverfahren nach einem der vorstehenden Ansprüche, zusätzlich **dadurch gekennzeichnet, dass** die mobile Vorrichtung (5) über die MSISDN *(Mobile Subscriber Integrated Services Digital Network Number)* identifiziert wird.

12. Das Arbeitsverfahren nach einem der vorstehenden Ansprüche, zusätzlich **dadurch gekennzeichnet, dass** ein oder mehrere Personal Video Recorder (1) und/oder eine oder mehrere mobile Vorrichtungen (5) durch die Erfassung von Benutzernamen und Kennwort identifiziert werden.

13. Das Arbeitsverfahren nach einem der vorstehenden Ansprüche, zusätzlich **dadurch gekennzeichnet, dass** ein wählbarer Datensatz als Datenstrom aus der Datenbank (4) über den Server (3) und den Übertragungskanal (2') an eine mobile Vorrichtung (5) übertragen werden kann.

14. Das Arbeitsverfahren nach einem der vorstehenden Ansprüche, zusätzlich **dadurch gekennzeichnet, dass** die vom Personal Video Recorder (1) aufzuzeichnenden Sendungen mittels einer mobilen Vorrichtung (5) aus einem elektronischen Programmführer ausgewählt werden können, indem eine Aufzeichnungsanweisung von der mobilen Vorrichtung (5) über den Server (3) an den Personal Video Recorder (1) übertragen wird.

15. Das Arbeitsverfahren nach einem der vorstehenden Ansprüche, zusätzlich **dadurch gekennzeichnet, dass** vom Server (3) eine Liste ähnlicher oder ergänzender Sendungen bereitgestellt wird.

## Revendications

1. Procédé pour le stockage et/ou l'accès d'enregistrements de programmes de télévision et pour la reproduction à distance de programmes de télévision enregistrés, qui sont enregistrés par un enregistreur vidéo personnel (1) qui peut être relié au moins temporairement à un serveur (3) en utilisant une première voie de communication (2), le serveur ayant accès à un magasin de vidéo à la demande de tous les programmes récents, le procédé étant **caractérisé en ce que**
via ladite première voie de communication (2), un ensemble de données d'informations d'enregistrement concernant un programme enregistré sur l'enregistreur vidéo personnel (1) avec l'identité du programme enregistré est transféré vers le serveur (3) et stocké dans une base de données (4) par le serveur (3) en utilisant un mécanisme de stockage, et **en ce qu'**une liste des ensembles de données stockés est disponible à partir de la base de données (4) par un équipement mobile (5) via une deuxième voie de communication (2'), ladite liste étant affichée par l'équipement mobile (5) sous la forme d'une page pour représenter un guide de programmes électronique des ensembles de données stockés, un programme peut être choisi à partir du guide de programmes électronique, cette sélection étant ensuite indiquée au serveur (3), et **en ce que** le serveur (3) accède audit magasin central de vidéo à la demande et commence à lire un flux du programme sélectionné à partir du magasin de vidéo à la demande vers l'équipement mobile spécifique (5) qui l'a choisi.

2. Procédé selon la revendication 1, **caractérisé en ce que** le serveur (3) est un serveur basé sur réseau, en particulier un serveur Web.

3. Procédé selon l'une des revendications précédentes, **caractérisé en ce que** l'ensemble de données transféré et stocké comprend des informations d'enregistrement supplémentaires, en particulier le titre du programme et/ou la date de l'enregistrement et/ou la durée de l'enregistrement et/ou si le programme fait partie d'une série et/ou d'une classification de programmes.

4. Procédé selon l'une des revendications précédentes, **caractérisé en ce que** la première voie de communication (2) utilise un modem téléphonique et/ou un accès commuté à Internet et/ou un accès Internet haut débit et/ou un système sans fil, en particulier l'Ethernet sans fil et/ou le Bluetooth vers un émetteur-récepteur et/ou une connexion de téléphonie mobile via un réseau mobile terrestre public.

5. Procédé selon l'une des revendications précédentes, **caractérisé en ce que** l'enregistreur vidéo (1) est au moins relié au serveur (3) à chaque évènement d'enregistrement ou de suppression au niveau de l'enregistreur vidéo personnel (1) et/ou périodiquement, en particulier après une durée réglable.

6. Procédé selon l'une des revendications précédentes, **caractérisé en ce que** la base de données (4) est mise à jour en stockant et/ou en supprimant des ensembles de données à chaque évènement d'enregistrement ou de suppression au niveau de l'enregistreur vidéo personnel (1) et/ou périodiquement, en particulier après une durée réglable.

7. Procédé selon l'une des revendications précédentes, **caractérisé en ce que** l'enregistreur vidéo personnel (1) est identifié par une identification et/ou authentification.

8. Procédé selon l'une des revendications précédentes, **caractérisé en ce que** la deuxième voie de communication (2') utilisée par l'équipement mobile (5) est un réseau mobile terrestre public.

9. Procédé selon l'une des revendications précédentes, **caractérisé en ce que** l'équipement mobile (5) est identifié par une identification et/ou authentification.

10. Procédé selon l'une des revendications précédentes, **caractérisé en ce qu'**un ou plusieurs enregistreurs vidéo personnels (1) et un ou plusieurs équipements mobiles (5), qui sont accessibles au serveur (3) et/ou à la base de données (4), sont appariés par le serveur (3) par l'identification et/ou l'authentification du ou des enregistreurs vidéo personnels (1) et équipements mobiles (5).

11. Procédé selon l'une des revendications précédentes, **caractérisé en ce que** l'équipement mobile (5) est identifié en utilisant le numéro de réseau numérique à intégration de services de l'abonné mobile (MSISDN).

12. Procédé selon l'une des revendications précédentes, **caractérisé en ce que** le ou les enregistreurs vidéo personnels (1) et/ou le ou les équipements mobiles (5) sont identifiés en capturant le nom d'utilisateur et le mot de passe.

13. Procédé selon l'une des revendications précédentes, **caractérisé en ce qu'**un ensemble de données sélectionnable est transférable sous la forme d'un flux de données depuis la base de données (4), via le serveur (3) et la voie de communication (2'), vers un équipement mobile (5).

14. Procédé selon l'une des revendications précédentes, **caractérisé en ce que** des programmes devant être enregistrés par l'enregistreur vidéo personnel (1) peuvent être sélectionnés à partir d'un guide de programmes électronique en utilisant un équipement mobile (5) en émettant une instruction d'enregistrement à partir de l'équipement mobile (5), via le serveur (3), vers l'enregistreur vidéo personnel (1).

15. Procédé selon l'une des revendications précédentes, **caractérisé en ce qu'**une liste de programmes similaires ou complémentaires est fournie par le serveur (3).
